(19) Europäisches Patentamt
European Patent Office
Office européen des brevets

(11) **EP 2 484 740 A1**

(12) # EUROPEAN PATENT APPLICATION
published in accordance with Art. 153(4) EPC

(43) Date of publication:
**08.08.2012 Bulletin 2012/32**

(51) Int Cl.:
**C09J 201/00** *(2006.01)*    **B32B 15/08** *(2006.01)*
**C09J 5/00** *(2006.01)*    **C09J 11/04** *(2006.01)*

(21) Application number: **10820613.7**

(22) Date of filing: **29.09.2010**

(86) International application number:
**PCT/JP2010/067006**

(87) International publication number:
**WO 2011/040498 (07.04.2011 Gazette 2011/14)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.09.2009 JP 2009227034**

(71) Applicant: **Akebono Brake Industry Co., Ltd.
Tokyo 103-8534 (JP)**

(72) Inventors:
• **HASHIMOTO Akinori
Tokyo (JP)**

• **IDEI Hiroshi
Tokyo (JP)**
• **HISHINUMA Hidetoshi
Tokyo (JP)**

(74) Representative: **Grünecker, Kinkeldey,
Stockmair & Schwanhäusser
Leopoldstrasse 4
80802 München (DE)**

(54) **ADHESIVE**

(57)    An object of the present invention is to improve the fluidity of a thermosetting powder adhesive and clear the blocking with a powder adhesive in a constant amount supplying apparatus or a delivery pathway. The present invention has attained the object by a powder adhesive containing a thermosetting adhesive particle and an inorganic filler present on the surface of the thermosetting adhesive particle.

*Fig. 2*

INORGANIC FILLER

ADHESIVE PARTICLE

EP 2 484 740 A1

**Description**

TECHNICAL FIELD

The present invention relates to an adhesive. More specifically, the present invention relates to a powder adhesive using a thermosetting adhesive particle.

BACKGROUND ART

As the method to bond a metal plate and a porous material, for example, a pressure plate (metal plate) of a brake pad and a friction material (porous material), there is a method including a step of attaching a thermosetting adhesive particle to a pressure plate by electrostatic coating, a step of pre-curing the thermosetting adhesive particle into the pre-hardened state, a step of applying pressure and heat on a friction material to thereby more firmly bond these members (see, Patent Document 1).

Also, a method of forming a ceramic film on a surface of a pressure plate, coating a primer on the pressure plate surface where the film is formed, then coating an adhesive thereon, overlaying a friction material, and applying thermoformation, is known (see, Patent Document 2).

On the other hand, in the field of powder coating materials, silica, alumina, titania or an oxide compound thereof, whose particle diameter is controlled by a cracking treatment, is used as a fluidizer for enhancing the fluidity (see, Patent Document 3).

CITATION LIST

PATENT DOCUMENT

Patent Document 1:    JP-A-2000-088021

Patent Document 2:    JP-A-2007-113698

Patent Document 3:    JP-A-2004-210875

SUMMARY OF INVENTION

TECHNICAL PROBLEMS

According to the method described in Patent Document 1, a friction material can be firmly bonded to a pressure plate without using primer. According to the method described in Patent Document 2, the environmental load can be reduced and stable film production and adhesion quality can be obtained.
However, the thermosetting powder adhesive used in these methods has low fluidity and high propensity for attachment and consolidation and sometimes causes a blocking in a constant amount supplying apparatus or delivery pathway with the adhesive, and this requires costs and labors for the maintenance of equipment, as a result, the production efficiency is disadvantageously reduced.

Also, it has not been applied to the adhesive field to mix such an inorganic filler with an adhesive.

Under these circumstances, the present invention has been made, and an object of the present invention is to improve the fluidity of a thermosetting powder adhesive and clear the blocking with a powder adhesive in a constant amount supplying apparatus or a delivery pathway.

SOLUTION TO PROBLEMS

As a result of intensive studies to attain the above-described object, the present inventors have found that in a powder adhesive prepared by mixing a thermosetting adhesive particle and an inorganic filler, when the inorganic filler is mixed to be located on the adhesive particle surface, the fluidity is enhanced and in addition, sufficient adhesion is obtained. The present invention has been accomplished based on this finding.

That is, the present invention has the following configurations.

<1> A powder adhesive comprising a thermosetting adhesive particle and an inorganic filler present on a surface of the thermosetting adhesive particle.

<2> The powder adhesive as described in <1> above, wherein a content of the inorganic filler is from 0.01 to 5 parts by mass per 100 parts by mass of the thermosetting adhesive particle.

<3> The powder adhesive as described in <1> or <2> above, wherein the inorganic filler is one member or two or more members selected from a group consisting of silicon oxide, aluminum oxide and titanium oxide.

<4> The powder adhesive as described in any one of <1> to <3> above, wherein a ratio of a volume average diameter of the thermosetting adhesive particle to a volume average diameter of a primary particle of the inorganic filler is 100 : 0.005 to 0.5.

<5> A method for producing the powder adhesive described in <1> above, the method comprising:

a step of mixing an inorganic filler and a thermosetting adhesive particle by a dry blending method, thereby locating the inorganic filler on a surface of the thermosetting adhesive particle.

<6> A method for bonding a porous material to a metal plate, comprising:

a step of electrostatically coating the powder adhesive described in any one of <1> to <4> or the powder adhesive obtained by the production method described in <5> above on a metal plate, and applying pre-curing to pre-harden the adhesive, and
a step of bonding a porous material to the pre-hardened powder adhesive with pressure and heating.

<7> A method for producing a bond system obtained by bonding a porous material to a metal plate, comprising:

a step of electrostatically coating the powder adhesive described in any one of <1> to <4> or the powder adhesive obtained by the production method described in <5> above on a metal plate, and applying pre-curing to pre-harden the adhesive, and
a step of bonding a porous material to the pre-hardened powder adhesive with pressure and heating.

ADVANTAGEOUS EFFECTS OF INVENTION

The powder adhesive of the present invention is enhanced in the fluidity compared with conventional powder adhesives, so that blocking in a constant amount supplying apparatus or a delivery pathway with the powder adhesive can be cleared. Then, the costs and labors required for the maintenance of equipment are reduced. Also, thanks to no occurrence of blocking, the amount of the adhesive coated is stabilized and the reliability of adhesion is raised. Also, according to a preferred embodiment of the present invention, the frictional electrification of the adhesive is increased, and this leads to improving the coverage for the coating amount of the adhesive and improving the production efficiency and material yield.

BRIEF DESCRIPTION OF DRAWINGS

Fig. 1 is a schematic view illustrating the cross-section of a powder adhesive when a thermosetting adhesive particle and an inorganic filler are compounded by a melt-kneading method.
Fig. 2 is a schematic view illustrating the cross-section of a powder adhesive when a thermosetting adhesive particle and an inorganic filler are mixed by a dry blending method.
Fig. 3 is a graph showing the change in thickness of the adhesive layer after coating vs. the number of coatings with respect to the adhesives of Examples 1 to 4 and Comparative Example 1.
Fig. 4 is a graph showing the change in thickness of the adhesive layer after coating vs. the number of coatings with respect to the adhesives of Examples 5 to 8 and Comparative Example 2.

DESCRIPTION OF EXAMPLES

The powder adhesive of the present invention is a powder adhesive containing a thermosetting adhesive particle and an inorganic filler. The inorganic filler is present on the surface of the thermosetting adhesive particle. The thermosetting adhesive includes a thermoplastic resin-modified thermosetting adhesive and an elastomer-modified thermosetting adhesive.

Examples of the thermoplastic resin-modified thermosetting adhesive include polyvinylbutyral/phenolic, polyvinylformal/phenolic, nylon/phenolic, polyvinyl acetate/phenolic, polyamide/epoxy, acryl/epoxy and polyester/epoxy.

Examples of the elastomer-modified thermosetting adhesive include NBR/phenolic, chloroprene/phenolic, silicone/phenolic, polyurethane/phenolic, NBR/epoxy and polyurethane/epoxy, In addition, as for the phenolic resin, resol or hexamine-containing novolak can be used.

The powder adhesive is coated on a material to be coated, by electrostatic coating. The method which can be used for electrostatic coating is a corona charging system or a triboelectric charging system. For the thermosetting adhesive particle used in the present invention, a commercially available product can be used. The volume average diameter of the particle may be sufficient if it is in the range usually used as an adhesive, and, for example, a thermosetting adhesive particle having a volume average diameter of 15 to 45 μm may be preferably used.

The inorganic filler contained in the powder adhesive of the present invention is not particularly limited in its kind, and examples thereof include silicon oxide, aluminum oxide, titanium oxide, tin oxide, zinc oxide, zirconium oxide, iron oxide, magnesium oxide, calcium carbonate and barium sulfate. Among these, when the inorganic filler is one member or two or more members selected from silicon oxide, aluminum oxide and titanium oxide, particularly, when aluminum oxide is preferably used, this is because the frictional electrification of the adhesive is raised and it is thereby realized to improve the coverage for the coated amount of the adhesive and improve the production efficiency and material yield.

The content of the inorganic filler is not particularly limited if it is a mixing amount usually used, and the content is preferably from 0.01 to 5 parts by mass per 100 parts by mass of the thermosetting adhesive particle. If the content is less than 0.01 parts by mass, the effect of enhancing the fluidization may not be brought out due to the too small mixing amount of the inorganic filler, whereas if the content exceeds 5 parts by mass, the adhesive force of the adhesive tends to be reduced. The content above is more preferably from 0.05 to 3 parts by mass, still more preferably from 0.05 to 1 part by mass, and most preferably from 0.1 to 0.5 parts by mass.

The inorganic filler may be a hydrophilic filler that is not surface-treated, or a hydrophobic filler after the surface is subjected to a hydrophobization treatment. Examples of the hydrophobing agent used for the hydrophobization treatment include dimethyldichlorosilane, hexamethyldisilazane and silicone oil.

The inorganic filler may be produced by a dry production method such as vapor phase oxidation method and combustion method or may be produced by a wet production method such as precipitation method. A commercially available product may be also used. To take sufficient effect of enhancing the fluidity, the inorganic filler is preferably a fine particle where the volume average diameter of its primary particle is from 5 to 100 nm. The volume average diameter of the primary particle is more preferably from 5 to 50 nm, still more preferably from 5 to 20 nm. The inorganic filler in the form of a fine particle usually aggregates and is present as a secondary particle or a tertiary particle, but in the present invention, the aggregate is cracked and mixed with the adhesive particle by dry blending and therefore, the average diameter is specified by the primary particle diameter.

The shape of the inorganic filler may be any of needle shape, columnar shape, nearly spherical shape, spherical shape and the like and is not particularly limited, but in view of fluidity, the shape is preferably nearly spherical or spherical. Also, the inorganic filler may be crystalline or amorphous but in view of safety, is preferably amorphous.

In the adhesive of the present invention, the ratio of the volume average diameter of the thermosetting adhesive particle to the volume average diameter of the primary particle of the inorganic filler is preferably from 100 : 0.005 to 0.5. As described later, in the present invention, the inorganic filler is located on the surface of the thermosetting adhesive particle, whereby the fluidity is enhanced. If the particle diameter of the inorganic filler is too small compared with the particle diameter of the thermosetting adhesive particle, the inorganic filler is easily buried in the adhesive particle and therefore, the effect of enhancing the fluidity tends to be scarcely exerted. The ratio is more preferably 100 : 0.005 to 0.3, still more preferably 100 : 0.005 to 0.1.

The powder adhesive of the present invention is characterized by mixing the inorganic filler and the thermosetting adhesive particle by a dry blending method to locate the inorganic filler on the surface of the thermosetting adhesive particle.

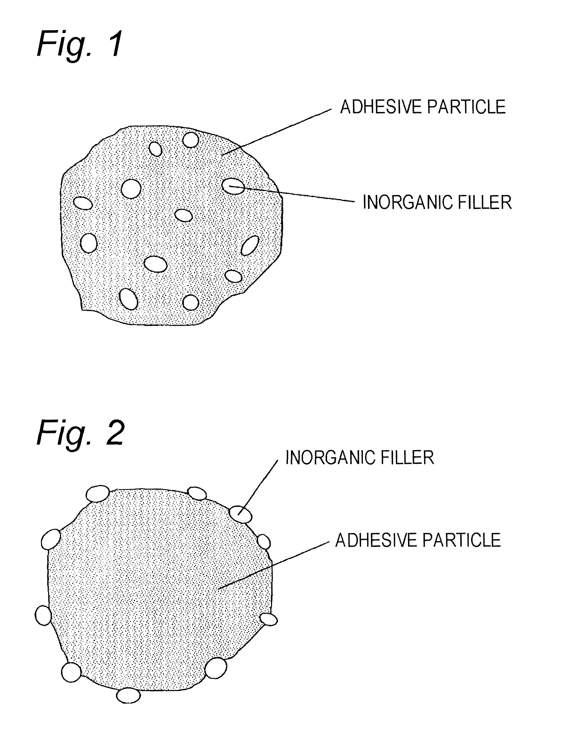

In the powder adhesive of the present invention, the inorganic filler and the thermosetting adhesive particle are mixed by a dry blending method, and the inorganic filler is located on the surface of the thermosetting adhesive particle without being completely buried in the particle, whereby the thermosetting adhesive particles are prevented from contacting with each other and the effect of enhancing the fluidity of the powder adhesive is exerted. The state of the inorganic filler being located on the surface of the thermosetting adhesive particle is described by referring to Figs. 1 and 2.

Fig. 1 is a schematic view illustrating the cross-section of a powder adhesive in which a thermosetting adhesive particle and an inorganic filler are compounded by a melt-kneading method. The inorganic filler is kneaded into the thermosetting adhesive particle at the kneading and buried in the adhesive particle, and the inorganic filler is not located on the surface of the adhesive particle.

On the other hand, Fig. 2 is a schematic view illustrating the cross-section of a powder adhesive in which an inorganic filler and a thermosetting adhesive particle are mixed by a dry blending method. An inorganic filler partially buried in the thermosetting adhesive particle is sometimes present due to the shear force at the dry blending, but the inorganic filer is located on the surface of the adhesive particle. In the present invention, when the inorganic filler is not completely buried in the surface of the adhesive particle and protrudes from the surface of the adhesive particle, this state is regarded as a state of the inorganic filler being located on the surface of the thermosetting adhesive particle.

The dry blending method may be a method using a dry blender and may be also a method of manually mixing the inorganic filler and the adhesive particle. Examples of the dry blender which can be used include a Henschel mixer, a super mixer and a high-speed mixer.

In the case of using a dry blender, the conditions usually used for dry blending can be employed, and mixing at a rotation speed of 100 to 10,000 rpm for 10 seconds to 120 minutes may be performed. Specifically, for example, when the rotation speed is 700 rpm, mixing for 15 seconds to 60 minutes is sufficient, and when 700 rpm, mixing for 60 seconds to 60 minutes is preferred. The mixing may be also executed at a low speed in the initial state and thereafter executed at a high speed. If the mixing is performed under the condition of excessively high temperature, the thermosetting adhesive particle is melted and the inorganic filler is buried. Therefore, mixing is preferably performed at a temperature not more than the glass transition point of the resin contained in the thermosetting adhesive particle.

The powder adhesive of the present invention can be used for various adhesion methods, for example, can be applied to the method disclosed in JP-A-2000-88021. Examples of the method include a method of accomplishing the adhesion through a step of electrostatically coating the powder adhesive on a metal plate such as pressure plate and applying pre-curing to pre-harden the adhesive, and a step of bonding a porous material such as friction material to the pre-hardened powder adhesive with pressure and heating. Also, a bond system where a porous material is bonded to a metal plate can be produced using the powder adhesive of the present invention. The production method thereof includes, as the bonding process, an electrostatic coating step, a pre-hardening step and a pressure and heating step, similarly to the above-described adhesion method.

EXAMPLES

The present invention is described in greater detail below by referring to Examples, but the present invention is not limited only to these Examples.

<Example 1>

Using a straight phenolic resin (novolak type, volume average diameter: 30 $\mu$m) as the thermosetting adhesive particle and using silicon oxide (AEROSIL R972, trade name, produced by Nippon Aerosil Co., Ltd., volume average diameter of primary particle: 16 nm, a product subjected to a hydrophobization treatment) as the inorganic filler, 100 parts by mass of the straight phenolic resin and 0.05 parts by mass of silicon oxide (AEROSIL R972) were added to a Henschel mixer and mixed at 700 rpm for 10 minutes at room temperature to obtain Adhesive 1.

<Examples 2 to 4>

Adhesives 2 to 4 were obtained in the same manner as in Example 1 except for changing the mixing amount of silicon oxide (AEROSIL R972) to 0.5 parts by mass, 1.0 parts by mass, and 3.0 parts by mass in Example 1.

<Example 5>

Using an NBR-modified phenolic resin (novolak type, volume average diameter: 35 $\mu$m) as the thermosetting resin particle and using silicon oxide (AEROSIL 300, trade name, produced by Nippon Aerosil Co., Ltd., volume average diameter of primary particle: 7 nm, an untreated product) as the inorganic filler, 100 parts by mass of the NBR-modified phenolic resin and 0.05 parts by mass of silicon oxide (AEROSIL 300) were added to a Henschel mixer and mixed at 700 rpm for 10 minutes to obtain Adhesive 5.

<Examples 6 to 8>

Adhesives 6 to 8 were obtained in the same manner as in Example 5 except for changing the mixing amount of silicon oxide (AEROSIL 300) to 0.5 parts by mass, 1.0 parts by mass, and 3.0 parts by mass in Example 5.

<Examples 9 to 12>

Adhesives 9 to 12 were obtained in the same manner as in Examples 1 to 4 except for using aluminum oxide (AEROXIDE AluC805, trade name, produced by Nippon Aerosil Co., Ltd., volume average diameter of primary particle: 13 nm, a product subjected to a hydrophobization treatment) as the inorganic filler in Examples 1 to 4.

<Examples 13 to 16>

Adhesives 13 to 16 were obtained in the same manner as in Examples 5 to 8 except for using aluminum oxide (AEROXIDE AluC, trade name, produced by Nippon Aerosil Co., Ltd., volume average diameter of primary particle: 13 nm, an untreated product) as the inorganic filler in Examples 5 to 8.

<Examples 17 to 20>

Adhesives 17 to 20 were obtained in the same manner as in Examples 1 to 4 except for using titanium oxide (AEROXIDE P25, trade name, produced by Nippon Aerosil Co., Ltd., volume average diameter of primary particle: 21 nm, an untreated product) as the inorganic filler in Examples 1 to 4.

<Examples 21 to 24>

Adhesives 21 to 24 were obtained in the same manner as in Examples 5 to 8 except for using titanium oxide (AEROXIDE NKT90, trade name, produced by Nippon Aerosil Co., Ltd., volume average diameter of primary particle: 14 nm, a product subjected to a hydrophobization treatment) as the inorganic filler in Examples 5 to 8.

<Comparative Example 1>

The straight phenolic resin used in Example 1 was used as Comparative Adhesive 1 without mixing an inorganic filler.

<Comparative Example 2>

The NBR-modified phenolic resin used in Example 2 was designated as Comparative Adhesive 2 without mixing an inorganic filler.

<Evaluation of Coating Stability>

Each of Adhesives 1 to 24 and Comparative Adhesives 1 and 2 was coated on an iron phosphate-treated pressure plate in accordance with the method described in JP-A-2000-88021 by using an electrostatic coating machine. For the supply of the powder adhesive, the powder adhesive in a tank was fluidized by an air and supplied to a gun by an injector. At this time, the presence or absence of blocking with the powder adhesive in the injector was confirmed.

With respect to Adhesives 1 to 8 obtained in Examples 1 to 8, coating was performed 1,000 times by using, as the coating apparatus, a corona gun manufactured by Wagner-Hosokawa Micron Ltd., and coating could be performed without occurrence of blocking with the powder adhesive in the injector.

With respect to Adhesives 9 to 16 obtained in Examples 9 to 16, coating was performed 800 times by changing the coating apparatus to a tribo gun manufactured by Nordson K.K., and coating could be performed without occurrence of blocking with the powder adhesive in the injector.

With respect to Adhesives 17 to 24 obtained in Examples 17 to 24, coating was performed 700 times by using, as the coating apparatus, a corona gun manufactured by Wagner-Hosokawa Micron Ltd., and coating could be performed without occurrence of blocking with the powder adhesive in the injector.

On the other hand, in the case of the straight phenolic resin as Comparative Adhesive 1, the injector was clogged with the powder adhesive in 650 coatings, and coating could not be performed any more.

In the case of the NBR-modified phenolic resin as Comparative Adhesive 2, the injector was blocked with the powder adhesive in 425 coatings, and coating could not be performed any more.

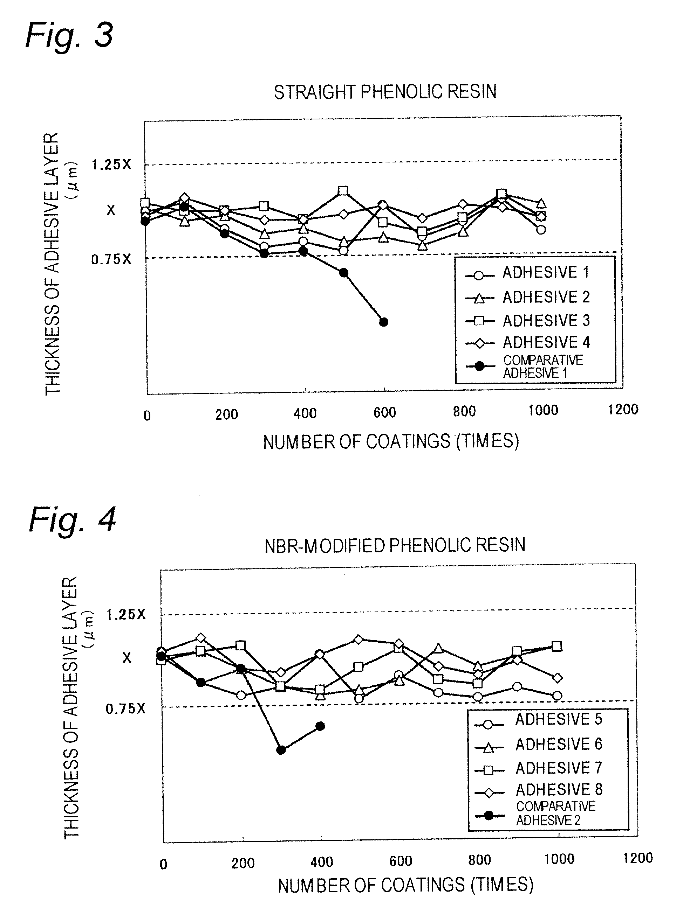

With respect to Adhesives 1 to 8 and Comparative Adhesives 1 and 2, how the thickness of the adhesive layer after pre-curing changes was confirmed every time the coating on the pressure plate was repeated. Figs. 3 and 4 show the change in thickness by setting the thickness of the adhesive layer after pre-curing to X $\mu$m.

As a result, when Adhesives 1 to 8 were used, the thickness of the adhesive layer after pre-curing was fluctuated within 25% based on the preset thickness value X $\mu$m until the coating was performed 1,000 times. On the other hand, when Comparative Adhesive 1 was used, the thickness fluctuation exceeded 25% based on the preset value in less than 500 coatings, and the coating could not be stably performed. Also, when Comparative Adhesive 2 was used, the thickness fluctuation exceeded 25% based on the preset value in less than 300 coatings, and the coating could not be stably performed.

These results reveal that the powder adhesive having mixed therein an inorganic filler enables stable coating without causing blocking.

<Evaluation of Adhesive Property>

Each of Adhesives 1 to 24 and Comparative Adhesives 1 and 2 was coated on a pressure plate and pre-hardened by applying pre-curing. A preformed body obtained by stirring the raw materials shown in Table 1 below and preforming the mixture and the pre-hardened adhesive were pressure-fixed/heated (thermoformation) and thereby bonded. After passing through heating, polishing and the like steps, a friction material was produced by a known production method. This friction material was subjected to a shear test (in accordance with JIS D4422) at ordinary temperature and measured for the shear strength and the area of base material fracture. The results obtained are shown in Tables 2 to 4.

[Table 1]

Table 1

| Blending Ratio of Raw Materials of Friction Material | |
| --- | --- |
| Name of Substance as Raw Material | Blending Ratio (parts by mass) |
| phenolic resin | 15 |
| aramid pulp | 10 |
| inorganic fiber | 15 |
| zirconium silicate | 3 |
| organic dust | 7 |
| barium sulfate | 45 |
| graphite | 5 |

[Table 2]

Table

| Results of Adhesive Property (Silicon Oxide) | | | | | | | | | | |
| --- | --- | --- | --- | --- | --- | --- | --- | --- | --- | --- |
| | Adhesive (Examples) | | | | | | | | Comparative Adhesive 1 | Comparative Adhesive 2 |
| | 1 | 2 | 3 | 4 | 5 | 6 | 7 | 8 | | |
| Amount of added silicon oxide (parts by mass) | 0.05 | 0.5 | 1.0 | 3.0 | 0.05 | 0.5 | 1.0 | 3.0 | 0 | 0 |
| Shear Strength (MPa) | 8.9 | 9.0 | 8.9 | 8.6 | 9.1 | 9.0 | 8.8 | 8.6 | 9.1 | 8.9 |
| Area of base material fracture (%) | 100 | 99 | 96 | 93 | 100 | 100 | 97 | 95 | 100 | 100 |

[Table 3]

Table 3

| Results of Adhesive Property (Aluminum Oxide) | | | | | | | | |
| --- | --- | --- | --- | --- | --- | --- | --- | --- |
| | Adhesive (Examples) | | | | | | | |
| | 9 | 10 | 11 | 12 | 13 | 14 | 15 | 16 |
| Amount of added aluminum oxide (parts by mass) | 0.05 | 0.5 | 1.0 | 3.0 | 0.05 | 0.5 | 1.0 | 3.0 |
| Shear Strength (MPa) | 8.7 | 9.2 | 8.7 | 8.5 | 8.9 | 9.1 | 8.5 | 8.5 |
| Area of base material fracture (%) | 100 | 99 | 94 | 92 | 100 | 99 | 97 | 94 |

[Table 4]

Table 4

| Results of Adhesive Property (Titanium Oxide) | | | | | | | | |
|---|---|---|---|---|---|---|---|---|
| | Adhesive (Examples) | | | | | | | |
| | 17 | 18 | 19 | 20 | 21 | 22 | 23 | 24 |
| Amount of added titanium oxide (parts by mass) | 0.05 | 0.5 | 1.0 | 3.0 | 0.05 | 0.5 | 1.0 | 3.0 |
| Shear Strength (MPa) | 9.3 | 9.0 | 8.8 | 8.5 | 9.1 | 8.8 | 8.5 | 8.3 |
| Area of base material fracture (%) | 100 | 100 | 96 | 94 | 100 | 100 | 98 | 95 |

Adhesives 1 to 24 having mixed therein an inorganic filler were the same in the shear strength as Comparative Adhesives 1 and 2 in which an inorganic filler was not added. Also, the area of base material fracture exceeded 80% in all adhesives and good performance was exhibited. As seen from these results, by locating an inorganic filler on the surface of an adhesive particle, the fluidity could be enhanced without deteriorating the adhesion performance.

<Evaluation of Coating Efficiency>

With respect to Adhesives 9 to 16, 5 g of each adhesive was coated on an aluminum plate of 200 mm x 200 mm by using a tribo gun, and the coverage was measured. The coating efficiency was determined according to the following formula, and the evaluation results are shown in Table 5.

$$\text{Coating efficiency (\%)} = \{\text{coverage (g)}/5\ \text{(g)}\}\times 100$$

[Table 5]

Table 5

| Evaluation Results of Coating Efficiency | | | | | | | | | | |
|---|---|---|---|---|---|---|---|---|---|---|
| | Adhesive (Examples) | | | | | | | | Comparative Adhesive 1 | Comparative Adhesive 2 |
| | 9 | 10 | 11 | 12 | 13 | 14 | 15 | 16 | | |
| Amount of added aluminum oxide (g) | 0.05 | 0.5 | 1.0 | 3.0 | 0.05 | 0.5 | 1.0 | 3.0 | 0 | 0 |
| Coating efficiency (%) | 57 | 62 | 64 | 70 | 47 | 50 | 52 | 54 | 55 | 45 |

As seen from the results above, by locating an inorganic filler on the surface of an adhesive particle, the coating efficiency can be increased, and the productivity can be enhanced.

<Examples 25 to 32>

Adhesives 25 to 32 were obtained in the same manner as in Example 1 except for changing the mixing amount of silicon oxide (AEROSIL R972) to 5.0 parts by mass and the mixing time in a Henschel mixer to 0.25 minutes, 0.50 minutes, 1.0 minutes, 2.0 minutes, 5.0 minutes, 10 minutes, 30 minutes and 60 minutes in Example 1.

<Comparative Example 3>

A comparative adhesive was obtained in the same manner as in Example 1 except for changing the mixing amount of silicon oxide (AEROSIL R972) to 5.0 parts by mass and performing the mixing by a melt-kneading method without using a Henschel mixer in Example 1. In the melt-kneading method, after mixing a straight phenolic resin and silicon oxide in a Henschel mixer at 700 rpm for 10 minutes at room temperature, the mixture was melt-kneaded at 110°C by a melt-kneading machine (co-kneader). The kneaded product was cooled to room temperature and classified until the particle diameter became 30 μm, whereby Comparative Adhesive 3 was obtained.

<Evaluation of Fluidity>

With respect to Adhesives 25 to 32 and Comparative Adhesives 1 and 3, the repose angle was measured. The measurement results are shown in Table 6. Also, with respect to Comparative Adhesive 3, the above-described evaluation of coating stability was performed, as a result, the injector was blocked with the powder adhesive in 670 coatings, and the coating could not be performed any more.

[Table 6]

Table 6

| Measurement Results of Repose Angle | | | | | | | | | | |
|---|---|---|---|---|---|---|---|---|---|---|
| | Adhesive (Examples) | | | | | | | | Comparative Adhesive 1 | Comparative Adhesive 3 |
| | 25 | 26 | 27 | 28 | 29 | 30 | 31 | 32 | | |
| Mixing time (min.) | 0.25 | 0.5 | 1.0 | 2.0 | 5.0 | 10.0 | 30.0 | 60.0 | - | melt kneading |
| Repose angle (°) | 43 | 40 | 31 | 32 | 30 | 32 | 31 | 33 | 55 | 54 |

It could be confirmed from these results that by locating an inorganic filler on the surface of an adhesive particle, the repose angle is reduced and the fluidity of the adhesive is increased. Also, when an adhesive particle and an inorganic filler were compounded by a melt-kneading method but not by a dry blending method, enhancement of the fluidity was not observed.

While the invention has been described in detail and with reference to specific embodiments thereof, it will be apparent to one skilled in the art that various changes and modifications can be made therein without departing from the spirit and scope of the invention. This application is based on Japanese Patent Application (Patent Application No. 2009-227034) filed on September 30, 2009, the contents of which are incorporated herein by way of reference.

INDUSTRIAL APPLICABILITY

The powder adhesive of the present invention can be utilized as an adhesive for bonding a metal plate and a porous material, for example, a pressure plate of a brake pad and a friction material. The powder adhesive of the present invention can be also used as an adhesive for bonding the shoe & lining of a drum brake.

**Claims**

1.  A powder adhesive, comprising:

    a thermosetting adhesive particle; and
    an inorganic filler present on a surface of the thermosetting adhesive particle.

2.  The powder adhesive according to claim 1, wherein
    a content of the inorganic filler is from 0.01 to 5 parts by mass per 100 parts by mass of the thermosetting adhesive particle.

3.  The powder adhesive according to claim 1 or 2, wherein
    the inorganic filler is one member or two or more members selected from a group consisting of silicon oxide, aluminum oxide and titanium oxide.

4.  The powder adhesive according to any one of claims 1 to 3, wherein
    a ratio of a volume average diameter of the thermosetting adhesive particle to a volume average diameter of a primary particle of the inorganic filler is 100 : 0.005 to 0.5.

**5.** A method for producing the powder adhesive according to claim 1, the method comprising:

a step of mixing an inorganic filler and a thermosetting adhesive particle by a dry blending method, thereby locating the inorganic filler on a surface of the thermosetting adhesive particle.

**6.** A method for bonding a porous material to a metal plate, comprising:

a step of electrostatically coating the powder adhesive according to any one of claims 1 to 4 or the powder adhesive obtained by the production method according to claim 5 on a metal plate, and applying pre-curing to pre-harden the adhesive; and
a step of bonding a porous material to the pre-hardened powder adhesive with pressure and heating.

**7.** A method for producing a bond system obtained by bonding a porous material to a metal plate, comprising:

a step of electrostatically coating the powder adhesive according to any one of claims 1 to 4 or the powder adhesive obtained by the production method according to claim 5 on a metal plate, and applying pre-curing to pre-harden the adhesive; and
a step of bonding a porous material to the pre-hardened powder adhesive with pressure and heating.

## Fig. 1

ADHESIVE PARTICLE

INORGANIC FILLER

## Fig. 2

INORGANIC FILLER

ADHESIVE PARTICLE

## Fig. 3

STRAIGHT PHENOLIC RESIN

## Fig. 4

NBR-MODIFIED PHENOLIC RESIN

<table>
<tr><td colspan="2" align="center">**INTERNATIONAL SEARCH REPORT**</td><td>International application No.<br>PCT/JP2010/067006</td></tr>
</table>

A.  CLASSIFICATION OF SUBJECT MATTER
*C09J201/00*(2006.01)i, *B32B15/08*(2006.01)i, *C09J5/00*(2006.01)i, *C09J11/04* (2006.01)i

According to International Patent Classification (IPC) or to both national classification and IPC

B.  FIELDS SEARCHED

Minimum documentation searched (classification system followed by classification symbols)
C09J1/00-201/00, B32B15/08

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 5-065468 A  (BEIERSDORF AG.),<br>19 March 1993 (19.03.1993),<br>claims; paragraphs [0010] to [0023]<br>& EP 490136 A2        & DE 4039636 A<br>& US 5434211 A | 1-4<br>5-7 |
| X<br>Y | JP 62-174284 A  (Toray Industries, Inc.),<br>31 July 1987 (31.07.1987),<br>claims; examples<br>& EP 216632 A1        & AU 8663062 A<br>& US 4732961 A        & DE 3670861 A<br>& CA 1281114 A        & KR 9403072 B1 | 1-4<br>5 |
| Y | JP 2004-043674 A  (Sekisui Chemical Co., Ltd.),<br>12 February 2004 (12.02.2004),<br>paragraph [0003]<br>(Family: none) | 5 |

☒   Further documents are listed in the continuation of Box C.          ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>08 November, 2010 (08.11.10) | Date of mailing of the international search report<br>22 November, 2010 (22.11.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/067006

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-088021 A (Akebono Brake Industry Co., Ltd.), 28 March 2000 (28.03.2000), claims (Family: none) | 6,7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000088021 A
- JP 2007113698 A
- JP 2004210875 A
- JP 2009227034 A